(19)

Europäisches
Patentamt
European
Patent Office
Office européen
des brevets

(11) **EP 4 421 106 A1**

(12) **EUROPEAN PATENT APPLICATION**
published in accordance with Art. 153(4) EPC

(43) Date of publication:
**28.08.2024 Bulletin 2024/35**

(21) Application number: 22885675.3

(22) Date of filing: **12.10.2022**

(51) International Patent Classification (IPC):
$C08G\ 63/183^{(2006.01)}$   $C08G\ 63/85^{(2006.01)}$
$C08L\ 67/02^{(2006.01)}$   $C08L\ 67/04^{(2006.01)}$
$C08L\ 63/00^{(2006.01)}$

(52) Cooperative Patent Classification (CPC):
C08G 63/183; C08G 63/85; C08L 63/00;
C08L 67/02; C08L 67/04

(86) International application number:
**PCT/CN2022/124852**

(87) International publication number:
**WO 2023/071796 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2021 CN 202111249166**

(71) Applicants:
• **Jiangsu Kingfa Sci. & Tech. Advanced Materials
Co., Ltd.
Suzhou, Jiangsu 215300 (CN)**
• **Zhuhai Kingfa Biomaterial Co., Ltd.
Zhuhai, Guangdong 519050 (CN)**
• **KINGFA SCI. & TECH. CO., LTD.
Guangzhou, Guangdong 510663 (CN)**

(72) Inventors:
• **ZHANG, Chuanhui
Suzhou, Jiangsu 215300 (CN)**

• **CHEN, Pingxu
Suzhou, Jiangsu 215300 (CN)**
• **YE, Nanbiao
Suzhou, Jiangsu 215300 (CN)**
• **OUYANG, Chunping
Suzhou, Jiangsu 215300 (CN)**
• **MAI, Kaijin
Suzhou, Jiangsu 215300 (CN)**
• **DONG, Xueteng
Suzhou, Jiangsu 215300 (CN)**
• **ZENG, Xiangbin
Suzhou, Jiangsu 215300 (CN)**
• **LU, Changli
Suzhou, Jiangsu 215300 (CN)**
• **CAI, Tongmin
Suzhou, Jiangsu 215300 (CN)**

(74) Representative: **Petraz, Gilberto Luigi et al
GLP S.r.l.
Viale Europa Unita, 171
33100 Udine (IT)**

(54) **SEMI-AROMATIC POLYESTER, AND PREPARATION METHOD THEREFOR AND
APPLICATION THEREOF**

(57)    The present invention discloses a semi-aromatic polyester, a preparation method therefor and use thereof. The content of hydroxyl in a semi-aromatic polyester is controlled, and particularly, the content of hydroxyl linked to aliphatic dicarboxylic acid in the semi-aromatic polyester is controlled to 17-40 mmol/kg, the content of hydroxyl linked to aromatic dicarboxylic acid in the semi-aromatic polyester is controlled to 17-40 mmol/kg, and the total content of hydroxyl is controlled to 35-80 mmol/kg, such that the compatibility of the semi-aromatic polyester with materials, e.g., polylactic acid can be significantly improved, thereby obtaining a high-strength tear-resistant film material.

FIG. 1

**Description**

**TECHNICAL FIELD**

The present invention relates to the technical field of biodegradable polyesters, and specifically relates to a semi-aromatic polyester with a specific content of hydroxyl, a preparation method therefor and use thereof.

**BACKGROUND**

Currently, thermoplastic aromatic polyesters widely used in industry and daily life have good thermal stability and mechanical properties, and are easy to process and low in price. For example, polyethylene terephthalate (PET) and polybutylene terephthalate (PBT) have been extensively applied in the manufacture of fibers, films, and containers. However, these aromatic polyesters are hardly degraded after being discarded. Up to now, no microorganism has yet been observed to directly and obviously degrade aromatic polyesters such as, PET and PBT. To integrate the excellent performance of aromatic polyesters, those skilled in the art have been devoted to studying the synthesis of aliphatic-aromatic copolyesters since 1980s; that is, aromatic chain segments are introduced into aliphatic polyesters.

Poly(butylene adipate-co-terephthalate) (PBAT), as a representative of aromatic polyesters, has a small tensile strength and low modulus. The application of PBAT is confined due to its shortcomings in mechanical strength, and thus PBAT needs to be improved.

Polylactic acid (PLA) is a kind of aliphatic polyester obtained after bio-based raw materials such as potato, cassava and corn starch are biologically fermented and chemically synthesized. PLA has good biocompatibility and biodegradability, excellent mechanical strength, transparency and machinability and thus, has been extensively applied to the fields such as pharmaceuticals, packaging films, and disposable articles of daily use. However, PLA has high brittleness and poor toughness and thus, is hardly popularized in lots of fields.

PBAT and PLA exhibit totally different mechanical properties. Therefore, both are usually used as complementary materials for blending modification; that is, PLA, as a matrix, is toughened by PBAT; or PBAT, as a matrix, is reinforced by PLA. The final modification effect depends upon the compatibility of the two. However, due to poor compatibility between PBAT and PLA, these toughening modifiers can only improve the impact strength of PLA to small extent, and are always hard to improve the ductility of PLA at the same time.

**SUMMARY**

To solve the above problems, the object of the present invention is to provide a semi-aromatic polyester. Due to the specific content of hydroxyl in the semi-aromatic polyester, the compatibility of the semi-aromatic polyester with materials, e.g., PLA can be significantly improved, thereby obtaining a high-strength tear-resistant film material.

Another object of the present invention is to provide a preparation method of the above semi-aromatic polyester.

The aforesaid objects of the present invention are achieved by the following technical solution:

A semi-aromatic polyester, derived from repeating units consisting of the following components:

a first component A, based on a total molar weight of the first component A, including:

a1) 40-60 mol% of at least one aliphatic dicarboxylic acid or a derivative thereof;
a2) 40-60 mol% of at least one aromatic dicarboxylic acid or a derivative thereof; and

a second component B: 1,4-butanediol;
where a content of hydroxyl linked to the aliphatic dicarboxylic acid in the semi-aromatic polyester is 17-40 mmol/kg,
a content of hydroxyl linked to the aromatic dicarboxylic acid in the semi-aromatic polyester is 17-40 mmol/kg, and
a total content of hydroxyl is 35-80 mmol/kg.

During synthesis of the polyester, because the monomer structure or proportion of raw materials is different; the types of catalysts, branching agents and chain extenders are different; moreover, there exist lots of influence factors such as preparation process, reaction time, and polymerization temperature, the final prepared polyesters greatly differ in their molecular structures. According to research, it has been found in the present invention that the content of hydroxyl in the semi-aromatic polyester may affect the compatibility of the semi-aromatic polyester with PLA and other materials. Too high or too low content of hydroxyl causes the semi-aromatic polyester to have poor compatibility with PLA and other materials.

According to research, it has been unexpectedly found in the present invention that the content of hydroxyl in a semi-aromatic polyester is controlled, and particularly, the content of hydroxyl linked to aliphatic dicarboxylic acid in the semi-aromatic polyester is controlled to 17-40 mmol/kg, the content of hydroxyl linked to aromatic dicarboxylic acid in the semi-aromatic polyester is controlled to 17-40 mmol/kg, and the total content of hydroxyl is controlled to 35-80 mmol/kg, such that the compatibility of the semi-aromatic polyester with materials, e.g., PLA, can be significantly improved, thereby obtaining a high-strength tear-resistant film material.

In the present invention, the aliphatic dicarboxylic acid, or the derivative thereof in the component a1) is selected from a mixture of one or more oxalic acid, malonic acid, succinic acid, glutaric acid, adipic acid, pimelic acid, suberic acid, azelaic acid, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, or tetracosandioic acid, or ester derivatives thereof or anhydride derivatives thereof.

As a detailed embodiment, the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl)glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, or an ester derivative thereof, or an anhydride derivative thereof; preferably, selected from one or more of succinic acid, adipic acid, decanedioic acid, 1,12-dodecanedicarboxylic acid, or an ester derivative thereof or an anhydride derivative thereof, more preferably, one or two of adipic acid, decanedioic acid, or an ester derivative thereof or an anhydride derivative thereof, and most preferably, adipic acid, or an ester derivative thereof or an anhydride derivative thereof.

In the present invention, the component a2) is selected from one or a mixture of more of terephthalic acid, isophthalic acid, naphthalenedicarboxylic acid, or an ester derivative thereof or an anhydride derivative thereof, and preferably, terephthalic acid, or ester derivatives thereof or anhydride derivatives thereof.

As a detailed embodiment, the component a2) is selected from one or more of terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenyl ether dicarboxylic acid, dimethyl 3,4'-diphenyl ether dicarboxylate, 4,4'-diphenyl ether dicarboxylic acid, dimethyl 4,4'-diphenyl ether dicarboxylate, 3,4'-phenylthioether dicarboxylic acid, dimethyl 3,4'-phenylthioether dicarboxylate, 4,4'-phenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), or an ester derivative thereof or an anhydride derivative thereof, and preferably terephthalic acid, or an ester derivative thereof or an anhydride derivative thereof.

In the present invention, if necessary, the semi-aromatic polyester further includes a third component C which is preferably a compound containing at least three functional groups, and preferably a compound containing three to six functional groups. It is preferably selected from one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, pyromellitic dianhydride, and more preferably, trimethylolpropane, pentaerythritol, or glycerol.

Based on the total molar weight of the first component A, the third component C has a content of 0.01-5.0 mol%, and further preferably 0.02-2.0 mol%.

The semi-aromatic polyester may further include a fourth component D as a chain extender.

The chain extender is one or more of isocyanates, isocyanurates, peroxides, epoxides, oxazolines, oxazines, lactams, carbodiimides or polycarbodiimides that contain two or more functional groups.

The isocyanate containing two or more functional groups may be an aromatic isocyanate or an aliphatic isocyanate, and preferably, aromatic diisocyanate or aliphatic diisocyanate. Preferably, the aromatic diisocyanate is toluene 2,4-diisocyanate, toluene 2,6-diisocyanate, diphenylmethane 2,2'-diisocyanate, diphenylmethane 2,4'-diisocyanate, diphenylmethane 4,4'-diisocyanate, naphthalene 1,5-diisocyanate, or xylene diisocyanate.

More preferably, the aromatic diisocyanate is diphenylmethane 2,2'-diisocyanate, diphenylmethane 2,4'-diisocyanate, or diphenylmethane 4,4'-diisocyanate.

The isocyanate containing two or more functional groups may be further tri-(4-isocyanatophenyl) methane with three rings.

Preferably, the aliphatic diisocyanate is preferably any linear or branched alkylene diisocyanate or cycloalkylene diisocyanate containing 2-20 carbon atoms, and more preferably containing 3-12 carbon atoms. The aliphatic diisocyanate may be hexamethylene 1,6-diisocyanate, isophorone diisocyanate, or methylenebis(4-isocyanatocyclohexane), and most preferably hexamethylene 1,6-diisocyanate or isophorone diisocyanate.

Preferably, the isocyanurate containing two or more functional groups may be an aliphatic isocyanurate derived from alkylene diisocyanates or cycloalkylene diisocyanates having 2-20 carbon atoms, and preferably, 3-12 carbon atoms, e.g., isophorone diisocyanate or methylenebis(4-isocyanatocyclohexane). The alkylene diisocyanates may be linear or branched compounds, particularly, preferably cyclic tripolymer, pentamer, or higher oligomer isocyanurates based on n-hexamethylene diisocyanates, e.g., hexamethylene 1,6-diisocyanate.

Preferably, the peroxide containing two or more functional groups is selected from a benzoyl peroxide, 1,1-di(tert-butylperoxo)-3,3,5-trimethylcyclohexane, 1,1-di(tert-butylperoxo)methylcyclododecane, 4,4-di(butylperoxo)n-butyl valerate, dicumyl peroxide, tert-butyl peroxybenzoate, dibutyl peroxide, $\alpha,\alpha$-di(tert-butylperoxo)diisopropylbenzene, 2,5-dimethyl-2,5-di(tert-butylperoxo)hexane, 2,5-dimethyl-2,5-di(tert-butylperoxo)hexyl-3-yne, or tert-butylcumyl peroxide.

Preferably, the epoxide containing two or more functional groups is preferably selected from hydroquinone, diglycidyl ether, resorcinol diglycidyl ether, 1,6-hexanediol diglycidyl ether, hydrogenated bisphenol A diglycidyl ether, diglycidyl terephthalate, diglycidyl tetrahydrophthalate, diglycidyl hexahydrophthalate, dimethyl diglycidyl phthalate, phenylene diglycidyl ether, ethylidene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethanediol diglycidyl ether, diglycol diglycidyl ether, polyethylene glycol diglycidyl ether, propylene glycol diglycidyl ether, dipropylene glycol diglycidyl ether, polypropylene glycol diglycidyl ether, or poly(1,4-butanediol) diglycidyl ether.

The epoxide containing two or more functional groups is further preferably a copolymer based on styrene, acrylate, and/or methacrylate and containing an epoxy group; the epoxy group is preferably glycidyl methacrylate (GMA). It has been proved that the beneficial compound is a copolymer having a GMA ratio of higher than 20 wt%, preferably higher than 30 wt%, and more preferably higher than 50 wt%. The epoxide equivalent weight in these copolymers is preferably 150-3000 g/equivalent, and more preferably 200-500 g/equivalent. The weight-average molecular weight (Mw) of the copolymers is preferably 2,000-25,000, and more preferably 3,000-8,000. The number-average molecular weight (Mn) of the copolymers is preferably 400-6,000, and more preferably 1,000-4,000. Polydispersity index (Q=Mw/Mn) is preferably 1.5-5.

The oxazoline/oxazine containing two or more functional groups is preferably dioxazoline or dioxazine, its bridging portion is a single bond, $(CH_2)z$-alkylene, where z= 2, 3 or 4, e.g., methylene, ethyl-1,2-diyl, propyl-1,3-diyl, propyl-1,2-diyl, or phenylene. Specifically, the dioxazoline is 2,2'-di(2-oxazoline), di(2-oxazolinyl)methane, 1,2-di(2-oxazolinyl)ethane, 1,3-di(2-oxazolinyl)propane or 1,4-di(2-oxazolinyl)butane, 2,2'-di(2-oxazoline), 2,2'-di(4-methyl-2-oxazoline), 2,2'-di(4,4'-dimethyl-2-oxazoline), 2,2'-di(4-ethyl-2-oxazoline), 2,2'-di(4,4'-diethyl-2-oxazoline), 2,2'-di(4-propyl-2-oxazoline), 2,2'-di(4-butyl-2-oxazoline), 2,2'-di(4-hexyl-2-oxazoline), 2,2'-di(4-phenyl-2-oxazoline), 2,2'-di(4-cyclohexyl-2-oxazoline), 2,2'-di(4-phenylmethyl-2-oxazoline), 2,2'-p-phenylenedi(4-methyl-2-oxazoline), 2,2'-p-phenylenedi(4,4'-dimethyl-2-oxazoline), 2,2'-m-phenylenedi(4-methyl-2-oxazoline), 2,2'-m-phenylenedi(4,4'-dimethyl-2-oxazoline), 2,2'-hexamethylenedi(2-oxazoline), 2,2'-octamethylenedi(2-oxazoline), 2,2'-decamethylenedi(2-oxazoline), 2,2'-ethylidenedi(4-methyl-2-oxazoline), 2,2'-tetramethylenedi(4,4'-dimethyl-2-oxazoline), 2,2'-9,9'-diphenoxyethanedi(2-oxazoline), 2,2'-cyclohexylenedi(2-oxazoline), or 2,2'-diphenylene(2-oxazoline), more preferably, 1,4-di(2-oxazolinyl)benzene, 1,2-di(2-oxazolinyl)benzene, or 1,3-di(2-oxazolinyl)benzene.

Specifically, dioxazine is 2,2'-di(2-dioxazine), di(2-dioxazinyl)methane, 1,2-di(2-dioxazinyl)ethane, 1,3-di(2-dioxazinyl)propane, 1,4-di(2-dioxazinyl)butane, 1,4-di(2-dioxazinyl)benzene, 1,2-di(2-dioxazinyl)benzene, or 1,3-di(2-dioxazinyl)benzene.

The carbodiimide or polycarbodiimide containing two or more functional groups is preferably N,N'-di-2,6-diisopropylphenyl carbodiimide, N,N'-di-o-tolyl carbodiimide, N,N'-diphenyl carbodiimide, N,N'-dioctyldecyl carbodiimide, N,N'-di-2,6-dimethylphenyl carbodiimide, N-tolyl-N'-cyclohexyl carbodiimide, N,N'-di-2,6-di-tert-butylphenyl carbodiimide, N-tolyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-dicyclohexyl carbodiimide, N,N'-di-p-tolyl carbodiimide, p-phenylenebis-di-o-tolyl carbodiimide, p-phenylenebis-dicyclohexyl carbodiimide, hexamethylenebis-dicyclohexyl carbodiimide, 4,4'-dicyclohexylmethane carbodiimide, ethylidenebisdiphenyl carbodiimide, N,N'-phenylmethyl-carbodiimide, N-octadecyl-N'-phenyl carbodiimide, N-benzyl-N'-phenyl carbodiimide, N-octadecyl-N"-tolyl carbodiimide, N-cyclohexyl-N'-tolyl carbodiimide, N-phenyl-N'-tolyl carbodiimide, N-benzyl-N'-tolyl carbodiimide, N,N'-di-o-ethylphenyl carbodiimide, N,N'-di-p-ethylphenyl carbodiimide, N,N'-di-o-isopropylphenyl carbodiimide, N,N'-di-p-isopropylphenyl carbodiimide, N,N'-di-o-isobutylphenyl carbodiimide, N,N'-di-p-isobutylphenyl carbodiimide, N,N'-di-2,6-diethylphenyl carbodiimide, N,N'-di-2-ethyl-6-isopropylphenyl carbodiimide, N,N'-di-2-isobutyl-6-isopropylphenyl carbodiimide, N,N'-di-2,4,6-trimethylphenyl carbodiimide, N,N'-di-2,4,6-triisopropylphenyl carbodiimide, N,N'-di-2,4,6-triisobutylphenyl carbodiimide, diisopropyl carbodiimide, dimethyl carbodiimide, diisobutyl carbodiimide, dioctyl carbodiimide, tert-butylisopropyl carbodiimide, di-$\beta$-naphthyl carbodiimide, or di-tert-butyl carbodiimide.

Preferably, the content of the fourth component D is 0.01-5 mol% based on the total molar weight of the first component A.

Preferably, the semi-aromatic polyester has a viscosity number of 150-350 ml/g as determined in a phenol/o-dichlorobenzene solution having a weight ratio of 1:1 in a 25±0.05°C thermostatic water bath in accordance with the provision of GB/T 17931-1999.

Preferably, the semi-aromatic polyester has a carboxyl group content of 5-50 mmol/kg, and further preferably, 10-30 mmol/kg.

The present invention further provides a method for preparing the above semi-aromatic polyester, including the following steps:

S1, adding a1 in a first component A and a second component B to a slurry formulation kettle according to a proportion, conveying a formulated slurry into a first esterification reactor, adding the refluxed second component B and a catalyst to the first esterification reactor from another path, and performing esterification for 2-4 h at 150-200°C and 30-110 kPa, to obtain an esterification product Ba1; adding a2 in the first component A and the second component B to a slurry formulation kettle according to a proportion, conveying a formulated slurry into a second esterification reactor, adding the refluxed second component B and a catalyst to the second esterification reactor from another path, and performing esterification for 2-4 h at 200-250°C and 30-110 kPa, to obtain an esterification product Ba2;

S2: performing primary polycondensation on the esterification product Ba1 obtained in the step S1 at a reaction temperature of 170-220°C and a pressure of 1-10 kPa; performing primary polycondensation on the esterification product Ba2 obtained in the step S1 at a reaction temperature of 230-270°C and a pressure of 1-10 kPa; both the esterification products Ba1 and Ba2 are separately subjected to the primary polycondensation, respectively until each reaction product reaches a viscosity number of 15-60 ml/g as determined in a phenol/o-dichlorobenzene solution having a weight ratio of 1:1 in a 25±0.05°C thermostatic water bath in accordance with the provision of GB/T 17931-1999, to obtain a primary polycondensation product Pre-Ba1 and a primary polycondensation product Pre-Ba2, respectively;

S3, transferring the primary polycondensation product Pre-Ba1 obtained in the step S2 into a first final polycondensation kettle for reaction at a temperature of 180-230°C and a pressure of 10-500 kPa; transferring the primary polycondensation product Pre-Ba2 obtained in the step S2 into a second final polycondensation kettle for reaction at a temperature of 220-270°C and a pressure of 10-500 kPa; both the primary polycondensation products Pre-Ba1 and Pre-Ba2 are separately subjected to polycondensation, respectively until each reaction product reaches a viscosity number of 50-180 ml/g as determined in a phenol/o-dichlorobenzene solution having a weight ratio of 1:1 in a 25±0.05°C thermostatic water bath in accordance with the provision of GB/T 17931-1999, to obtain a final polycondensation product Poly-Bal and a final polycondensation product Poly-Ba2, respectively; and

S4, mixing the final polycondensation products Poly-Bal and Poly-Ba2 obtained in the step S3 in a mixer for reaction to obtain the semi-aromatic polyester such that the semi-aromatic polyester reaches a viscosity number of 150-300 ml/g as determined in a phenol/o-dichlorobenzene solution having a weight ratio of 1:1 in a 25±0.05°C thermostatic water bath in accordance with the provision of GB/T 17931-1999.

The pressure in the process of the present invention is absolute pressure (AP).

Preferably, in the step S1, during the preparation of the esterification product Ba2, a catalyst is added in an amount of 0.001-1% of a final weight of the semi-aromatic polyester. Preferably, the catalyst is added in an amount of 0.02-0.2% of the final weight of the semi-aromatic polyester. The amount of the catalyst added is controlled to make the subsequent machining process more stable. Furthermore, the catalyst may be a tin compound, an antimony compound, a cobalt compound, a lead compound, a zinc compound, an aluminium compound or a titanium compound, more preferably, a zinc compound, an aluminium compound or a titanium compound, most preferably, a titanium compound. The titanium compound, e.g., tetrabutyl orthotitanate or tetraisopropyl orthotitanate, has the advantage of low toxicity of the residue in the product or down-stream product over other compounds. This property is especially important in biodegradable polyesters because it will directly enter the environment in a form of a compost bag or cover film.

In the step S1, the total molar content of the second component B is usually 1.1-3.0 times that of the first component A, and the excessive second component B is recycled to the esterification reactor by a purification device (a rectifying column generally) connected to the esterification reactor. The amount of the recovered second component B is generally 20-50 wt% of the amount of the fresh second component B.

In step S2, during the preparation the prepolymer Pre-Ba1, the reaction temperature is more preferably 180-200°C; and the reaction pressure is more preferably 2-5 kPa.

In the step S2, during the preparation of the prepolymer Pre-Ba2, the remaining catalyst in the step S1 may be added to the step S2 if necessary. The reaction temperature is more preferably 240-260°C; and the reaction pressure is more preferably 2-5 kPa.

In the step S2, during the preparation of the Pre-Ba1 and Pre-Ba2, the reaction time is generally 2-5 h; usually, after such a period of time, the reaction system may generate the primary polycondensation products Pre-Ba1 and Pre-Ba2 which have a viscosity number of 15-60 ml/g as determined in a phenol/o-dichlorobenzene solution having a weight ratio of 1:1 in a 25±0.05°C thermostatic water bath in accordance with GB/T 17931-1999. After the S2 reaction, the primary polycondensation products Pre-Ba1 and Pre-Ba2 generally have the carboxyl group content of 10-60 mmol/kg.

In the polycondensation of step S3, a passivator may be mixed with a prepolyester if necessary. The available passivator is usually a compound of phosphorus including phosphoric acid, phosphorous acid, and esters thereof. Based on the weight of the final polyester, the amount of the passivator used is usually 0.001-0.1 wt%, and preferably 0.01-0.05 wt%.

In step S3, during the preparation of the polyester Poly-Ba1, the reaction temperature is more preferably 190-220°C; and the reaction pressure is more preferably 50-200 Pa.

In step S3, during the preparation of the polyester Pre-Ba2, the reaction temperature is more preferably 240-260°C; and the reaction pressure is more preferably 20-100 Pa.

In step S3, the reaction time of polycondensation is preferably 1-5 h, and more preferably 2-4 h. The produced polyesters Poly-Ba1 and Poly-Ba1 have a viscosity number of 50-180ml/g as determined in a phenol/o-dichlorobenzene solution having a weight ratio of 1:1 in a 25±0.05°C thermostatic water bath in accordance with the provision of GB/T 17931-1999. Moreover, the carboxyl group content in the polyesters Poly-Ba1 and Poly-Ba1 after the reaction in the S3 is generally 5-60 mmol/kg, and preferably 10-30 mmol/kg.

In step S4, Poly-Ba1 and Poly-Ba2 were mixed in a mixer; the mixer includes a raw material injection system, a temperature control system, a high-shear homogenization pump, and a homogenizer; the temperature range of the mixer is 200°C-280°C, and preferably 240°C-260°C; the retention time of the Poly-Ba1 and Poly-Ba2 in the mixer is 1-4 h, and preferably 1.5-2 h. The reaction product obtained after through the mixer achieved a viscosity number 150-300ml/g as determined in a phenol/o-dichlorobenzene solution having a weight ratio of 1:1 in a 25±0.05°C thermostatic water bath as defined in GB/T 17931-1999.

Preferably, if necessary, the method further includes a step S5: adding the semi-aromatic polyester obtained in the step S4 to a fourth component D for chain propagation reaction at a temperature of 200-270°C for retention for 0.5-15 min, and preferably 2-5 min until a reaction product reaches a viscosity number of 150-350 ml/g as determined in a phenol/o-dichlorobenzene solution having a weight ratio of 1:1 in a 25±0.05°C thermostatic water bath in accordance with the provision of GB/T 17931-1999, to obtain a final product.

The present invention further provides use of the above semi-aromatic polyester in preparing a compost-degradable product; the compost-degradable product is a fiber, a film, or a container, etc.

The present invention further provides a semi-aromatic polyester molding composition, including the following components in weight percentage:

5-95 wt% of the above semi-aromatic polyester;
5-95 wt% of an additive and/or other polymers; and
0-70 wt% of a reinforcing material and/or a filler.

As a detailed embodiment, the additive and/or other polymers may be, at least one or more components selected from aliphatic polyesters, polycaprolactones, starch, cellulose, polyhydroxyalkanoates, and polylactic acids.

Compared with the prior art, the present invention has the following beneficial effects:
The present invention provides a semi-aromatic polyester. The content of hydroxyl in a semi-aromatic polyester is controlled, and particularly, the content of hydroxyl linked to aliphatic dicarboxylic acid in the semi-aromatic polyester is controlled to 17-40 mmol/kg, the content of hydroxyl linked to aromatic dicarboxylic acid in the semi-aromatic polyester is controlled to 17-40 mmol/kg, and the total content of hydroxyl is controlled to 35-80 mmol/kg, such that the compatibility of the semi-aromatic polyester with materials, e.g., PLA, can be significantly improved, thereby obtaining a high-strength tear-resistant film material.

## BRIEF DESCRIPTION OF DRAWINGS

FIG. 1 shows $^1$H NMR of PBAT obtained by the reaction of terephthalic acid, adipic acid, and 1,4-butanediol determined by an AV 500 nuclear magnetic resonance spectrometer from Bruker; and
FIG. 2 shows corresponding peaks of $CH_2$ adjacent to the hydroxyl linked to adipic acid and hydroxyl linked to terephthalic acid of PBAT.

## DETAILED DESCRIPTION OF EMBODIMENTS

Raw materials, reagents and solvents used in the present invention, are commercially available without any treatment, unless otherwise specified. The present invention will be further described specifically in combination with examples; however, the embodiments of the present invention are not limited to the following examples. Moreover, any other changes, modifications, replacements, combinations and simplifications without departing from the spirit and principle of the present invention shall be equivalent replacements and thus, shall fall within the scope of protection of the present invention. In addition, "part(s)" and "%" in the description, unless otherwise specified, denote "part(s) by mass" and "mass%", respectively.

**Performance test method:**

Test for the content of hydroxyl in the semi-aromatic polyester (PBAT obtained in Example 1 is set as an example):

20 mg of the semi-aromatic polyester sample were taken and dissolved into 0.6 ml of deuterated chloroform, and then $^1$H NMR was measured by an AV 500 nuclear magnetic resonance spectrometer from Bruker at room temperature, and the chloroform solvent peak (7.26 ppm) was calibrated.

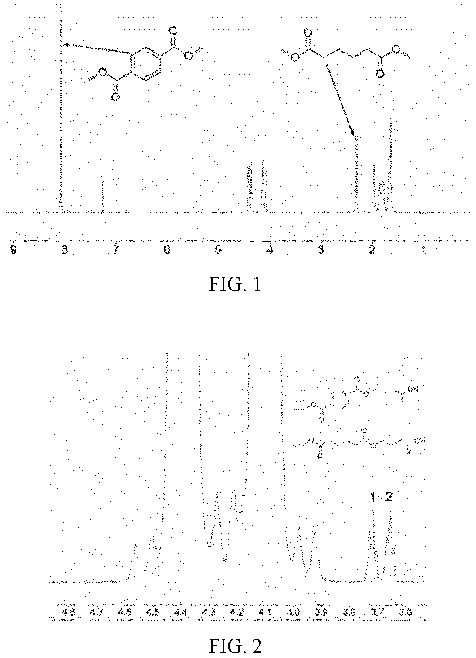

As can be seen from the reference: Chen, X; Chen, W.; Zhu, G.; Huang, F.; Zhang, J., Synthesis, 1H-NMR characterization, and biodegradation behavior of aliphatic aromatic random copolyester. J. Appl. Polym. Sci. 2007, 104(4): 2643-2649, 4 hydrogen atoms on the benzene ring of the repeating unit of terephthalic acid appeared nearby 8.10 ppm; 4 hydrogen atoms in the two $CH_2$ units adjacent to the carbonyl in the repeating unit of adipic acid appeared nearby 2.33 ppm. The results are shown in FIG. 1. As such, the molar content of the two acid components may be denoted by the integral areas ($I_T$ and $I_A$) of the two peaks at 8.10 ppm and 2.33 ppm.

The molar content of terephthalic acid in PBAT is equal to $I_T/(I_T+I_A)\times100\%$

The molar content of adipic acid in PBAT is equal to $I_A/(I_T+I_A)\times100\%$

Reference: (Herrera, R.; Franco, L.; Rodríguez-Galán, A.; Puiggali, J., Characterization and degradation behavior of poly(butylene adipate-co-terephthalate)s. J. Polym. Sci., Part A: Polym. Chem. 2002,40(23): 4141-4157): $CH_2$ adjacent to the hydroxyl linked to adipic acid appeared nearby 3.68 ppm, and $CH_2$ adjacent to the hydroxyl linked to terephthalic acid appeared nearby 3.74 ppm.

According to FIG. 2, it may be calculated that

the content $X_A$ (unit: mmol/kg) of the hydroxyl linked to an aliphatic dicarboxylic acid (adipic acid) in the semi-aromatic polyester PBAT is as follows:

$$X_A = \left( \frac{\frac{I_2}{2}}{\frac{I_T+I_A}{4}} \middle/ M \right) \times 10^6 = 2\frac{I_2}{(I_T+I_A)M} \times 10^6 \quad (1)$$

the content $X_A$ (unit: mmol/kg) of the hydroxyl linked to an aromatic dicarboxylic acid (terephthalic acid) in the semi-aromatic polyester PBAT is as follows:

$$X_T = \left( \frac{\frac{I_1}{2}}{\frac{I_T+I_A}{4}} \middle/ M \right) \times 10^6 = 2\frac{I_1}{(I_T+I_A)M} \times 10^6 \quad (1)$$

the total content X of hydroxyl is as follows:

$$X=X_A+X_T$$

where,

$I_1$ is an integral area of the peak of 2 hydrogen atoms in $CH_2$ adjacent to the hydroxyl linked to terephthalic acid;
$I_2$ is an integral area of the peak of 2 hydrogen atoms in $CH_2$ adjacent to the hydroxyl linked to adipic acid;
$I_T$ is an integral area of the peak of 4 hydrogen atoms on the benzene ring of the repeating unit of terephthalic acid;
$I_A$ is an integral area of the 4 hydrogen atoms on the two -$CH_2$- linked to carbonyl of the repeating unit of adipic acid;
M is the average molecular weight of the repeating units in the semi-aromatic polyester PBAT; in Example 1, when the molar ratio of terephthalic acid to adipic acid is 0.468:0.532, the average molecular weight (M) of the repeating units: M=0.468*MPBT+0.532*MPBA. MPBT is 220 g/mol, the molecular weight of the repeating unit in PBT; MPBA is 200 g/mol, the molecular weight of the repeating unit in MPBA; the average molecular weight (M) of the repeating units in the semi-aromatic polyester PBAT of Example 1 is: M=209 g/mol.

Viscosity number of the semi-aromatic polyester:
The viscosity number was determined in a phenol/o-dichlorobenzene solution having a weight ratio of 1:1 in a 25±0.05°C thermostatic water bath in accordance with the provision of GB/T 17931-1999; the sample concentration was 5 mg/ml.

Carboxyl group content:

Acid value AN (mg KOH/g) was first determined according to the DIN EN 12634 in October 1998, and then the carboxyl group content (mmol/kg)=(AN/56)×103. The solvent mixture used includes 1 part by volume of DMSO, 8 parts by volume of isopropanol, and 7 parts by volume of toluene, in a volume of 100 ml. 3-6 g of semi-aromatic polyester were taken and heated up to 70°C such that all the polymers were totally dissolved to a clean solution. During the titration process, the solution temperature was kept 60-70°C to avoid the precipitation of the polymer. The titrating solution is selected from tetrabutylammonium hydroxide instead of highly-toxic tetramethylammonium hydroxide. Meanwhile, to prevent the mixed solvent from absorbing $CO_2$ in the air to affect the volume of the titrating solution consumed by the blank solvent, when the volume of the titrating solution consumed by the blank solvent is determined, the blank solvent should be heated up to 70°C and then kept for 0.5 h, and then the blank solvent is immediately titrated with an alkaline liquor such that $CO_2$ in the air is further absorbed by the blank solvent after being heated.

Tear strength:

The obtained polyester composition is subjected to film blowing on a double-air ring film blowing machine; the film thickness is 20 μm; the air volume of the inner and outer air rings is controlled within 1:1-1:3; and the blow-up ratio is 2.5-4.0.

Transverse tensile strength and longitudinal tensile strength are determined, respectively in accordance with GB/T 1040.3-2006 Plastics-Determination of tensile properties-Part 3: Test conditions for films and sheets.

Longitudinal and transverse tear strength and longitudinal tear strength are determined, respectively in accordance with GB/T 16578.2-2009 Plastics-Film and sheeting-Determination of tear resistance-Part 2: Elmendorf method.

Example 1:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 45 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 35 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 146 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 135 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of hexamethylene diisocyanate (HDI) were measured and added, and then the temperature was set 250°C. 3 min later after the retention, the polyester was then granulated with an underwater granulator, and dried to obtain the final polyester product.

Example 2:

S1, 491 kg/h of decanedioic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained.

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 46 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 37 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 151 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 132 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Example 3:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 289 kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 33 ml/g as determined in a phenol/o-dichlorobenzene solution having a weight ratio of 1:1 in a $25\pm0.05$°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 27 ml/g as determined in a phenol/o-dichlorobenzene solution having a weight ratio of 1:1 in a $25\pm0.05$°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 134 ml/g as determined in a phenol/o-dichlorobenzene solution having a weight ratio of 1:1 in a $25\pm0.05$°C thermostatic water bath as defined in GB/T 17931-1999;

the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 128 ml/g as determined in a phenol/o-dichlorobenzene solution having a weight ratio of 1:1 in a $25\pm0.05$°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Example 4:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

500 kg/h of terephthalic acid and 407 kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 136 kg/h, and meanwhile, 0.61 kg/h of glycerol and 0.466 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 44 ml/g as determined in a phenol/o-dichlorobenzene solution having a weight ratio of 1:1 in a $25\pm0.05$°C thermostatic water bath as defined in GB/T 17931-1999;

the esterification product Ba2 was transferred into a second pre-polycondensation kettle, and meanwhile, 0.200 kg/h of titanium tetrabutoxide and 0.501 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 29 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 142 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 133 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 5.03 kg/h of HDI were measured and added, and then the temperature was set 250°C. 3 min later after the retention, the polyester was then granulated with an underwater granulator, and dried to obtain the final polyester product.

Example 5:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 8 kPa, and the retention time was 2-3 h; the excessive butanediol was drawn out; at this time, the reaction product Pre-Ba1 achieved a viscosity number of 31 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 8 kPa, and the retention time was 2-3 h; the excessive butanediol was drawn out; at this time, the reaction product Pre-Ba2 achieved a viscosity number of 21 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 300 Pa via a melt pump for reaction for 3-4 h. At this time, the reaction product Poly-Ba1 achieved a viscosity number of 116 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 200 Pa via a melt pump for reaction for 3-4 h. At this time, the reaction product Poly-Ba2 achieved a viscosity number of 105 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Example 6:

S1, 355 kg/h of adipic acid and 219kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 66kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 193kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 58kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 28 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 21 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 96 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 83 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Example 7:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 43 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 37 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 136 ml/g as determined in a phenol/o-dichlorobenzene solution having a weight ratio of 1:1 in a 25±0.05°C thermostatic water bath as defined in GB/T 17931-1999;
the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 129 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 2 h at a temperature of 250°C. The obtained polyester was then introduced into a twin-screw extruder and granulated with an underwater granulator, and dried to obtain the final polyester product.

Example 8:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 2 kPa, and the retention time was 2-3 h; the excessive butanediol was drawn out; at this time, the reaction product Pre-Ba1 achieved a viscosity number of 51ml/g as determined in a phenol/o-dichlorobenzene solution having a weight ratio of 1:1 in a 25±0.05°C thermostatic water bath as defined in GB/T 17931-1999;
the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 1 kPa, and the retention time was 2-3 h; the excessive butanediol was drawn out; at this time, the reaction product Pre-Ba2 achieved a viscosity number of 43 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 80 Pa via a melt pump for reaction for 3-4 h. At this time, the reaction product Poly-Ba1 achieved a viscosity number of 163 ml/g as determined in a phenol/o-dichlorobenzene solution having a weight ratio of 1:1 in a 25±0.05°C thermostatic water bath as defined in GB/T 17931-1999;
the prepolymer Pre-Ba2 was sent into a second final polymerization kettle at a temperature of 250°C and a pressure of 10 Pa via a melt pump for reaction for 3-4 h. At this time, the reaction product Poly-Ba2 achieved a viscosity number of 147 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Example 9:

S1, 355 kg/h of adipic acid and 328 kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109 kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-2.5 h; the excessive butanediol was drawn out; at this time, the reaction product Pre-Ba1 achieved a viscosity number of 29 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-2.5 h; the excessive butanediol was drawn out; at this time, the reaction product Pre-Ba2 achieved a viscosity number of 18 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 2-3 h. At this time, the reaction product Poly-Ba1 achieved a viscosity number of 106 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 2-3 h. At this time, the reaction product Poly-Ba2 achieved a viscosity number of 95 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Comparative Example 1:

S1, 355 kg/h of terephthalic acid, 355 kg/h of adipic acid, 617 kg/h of 1,4-butanediol, 0.92 kg/h of glycerol, and 0.51 kg/h of tetrabutyl orthotitanate were continuously added to a slurry formulation kettle and formulated to slurry, and then the formulated slurry was continuously fed into an esterification reactor; another path of 1,4-butanediol from the bottom of a process column had a flow rate of 206 kg/h, and then the reactor pressure was controlled 40 kPa (absolute pressure); the temperature was 240°C, and the retention time was 2-4 h; after water, tetrahydrofuran, and butanediol generated from the reaction were removed, an esterification product BA was obtained.

S2, the esterification product BA was introduced into a pre-polycondensation kettle via gravity, and meanwhile, 0.22 kg/h of titanium tetrabutoxide and 0.55 kg/h of triphenyl phosphate were added; the temperature was 250°C; the kettle pressure was 2 kPa, and the retention time was 2-3 h; the excessive butanediol was drawn out; at this time, the reaction product Pre-BA achieved a viscosity number of 35 ml/g as determined in a phenol/o-dichlorobenzene solution having a weight ratio of 1:1 in a 25±0.05°C thermostatic water bath as defined in GB/T 17931-1999;

S3, the prepolymer Pre-BA was sent into a disc-type reactor (i.e., a final polymerization kettle) at a temperature of 250°C and a pressure of 20 Pa via a melt pump for reaction for 3-4 h. At this time, the reaction product Poly-BA achieved a viscosity number of 133 ml/g as determined in a phenol/o-dichlorobenzene solution having a weight ratio of 1:1 in a 25±0.05°C thermostatic water bath as defined in GB/T 17931-1999;

S4, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Comparative Example 2:

S1, 355 kg/h of adipic acid and 153kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 66kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-4 h; after water, tetrahydrofuran, and butanediol generated from the reaction were removed, an esterification product Ba1 was obtained;

355 kg/h of terephthalic acid and 135kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 58kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-4 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 2-3 h; the excessive butanediol was drawn out; at this time, the reaction product Pre-Ba1 achieved a viscosity number of 15 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 2-3 h; the excessive butanediol was drawn out; at this time, the reaction product Pre-Ba2 achieved a viscosity number of 10 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 3-4 h. At this time, the reaction product Poly-Ba1 achieved a viscosity number of 83 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 3-4 h. At this time, the reaction product Poly-Ba2 achieved a viscosity number of 62 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a mixer for retention for 1.5 h at a temperature of 250°C. Afterwards, the obtained polyester was introduced into a twin-screw extruder, and meanwhile, 4.2 kg/h of HDI were measured and added, and then the temperature was set 250°C. 3 min later after the retention, the polyester was then granulated with an underwater granulator, and dried to obtain the final polyester product.

Comparative Example 3:

S1, 355 kg/h of adipic acid and 328kg/h of 1,4-butanediol were continuously added to a slurry formulation kettle and formulated to slurry, and then the formulated slurry was continuously fed into a first esterification reactor; another path of 1,4-butanediol from the bottom of a process column had a flow rate of 109kg/h, and meanwhile, 0.49 kg/h of glycerol and 0.179 kg/h of titanium tetrabutoxide were added, and then the reactor pressure was controlled 40 kPa (absolute pressure); the temperature was 190°C, and the retention time was 2-3 h; after water, tetrahydrofuran, and butanediol generated from the reaction were removed, an esterification product Ba1 was obtained;

355 kg/h of terephthalic acid and 289kg/h of 1,4-butanediol were continuously added to a slurry formulation kettle and formulated to slurry, and then the formulated slurry was continuously fed into a second esterification reactor; another path of 1,4-butanediol from the bottom of a process column had a flow rate of 96 kg/h, and meanwhile, 0.43 kg/h of glycerol and 0.331 kg/h of titanium tetrabutoxide were added, and then the reactor pressure was controlled 40 kPa (absolute pressure); the temperature was 240°C, and the retention time was 2-3 h; after water, tetrahydrofuran, and butanediol generated from the reaction were removed, an esterification product Ba2 was obtained.

S2, the esterification product Ba1 was transferred into a first pre-polycondensation kettle, and meanwhile, 0.077 kg/h of titanium tetrabutoxide and 0.198 kg/h of triphenyl phosphate were added; the temperature was 200°C; the kettle pressure was 4 kPa, and the retention time was 1-2 h; the excessive butanediol was drawn out; at this time, the reaction product Pre-Ba1 achieved a viscosity number of 25 ml/g as determined in a phenol/o-dichlorobenzene solution having a weight ratio of 1:1 in a 25±0.05°C thermostatic water bath as defined in GB/T 17931-1999;

the esterification product Ba2 was transferred into a second pre-polycondensation kettle, and meanwhile, 0.142 kg/h of titanium tetrabutoxide and 0.356 kg/h of triphenyl phosphate were added; the temperature was 250°C; the kettle pressure was 2 kPa, and the retention time was 1-2 h; the excessive butanediol was drawn out; at this time, the reaction product Pre-Ba2 achieved a viscosity number of 13 ml/g as determined in a phenol/o-dichlorobenzene solution having a weight ratio of 1:1 in a 25±0.05°C thermostatic water bath as defined in GB/T 17931-1999;

S3, the prepolymer Pre-Ba1 was sent into a first final polymerization kettle at a temperature of 220°C and a pressure of 120 Pa via a melt pump for reaction for 30-60 min. At this time, the reaction product Poly-Ba1 achieved a viscosity number of 95 ml/g as determined in a phenol/o-dichlorobenzene solution having a weight ratio of 1:1 in a 25±0.05°C thermostatic water bath as defined in GB/T 17931-1999;

the prepolymer Pre-Ba2 was sent into a second final polymerization kettle at a temperature of 250°C and a pressure of 20 Pa via a melt pump for reaction for 30-60 min. At this time, the reaction product Poly-Ba2 achieved a viscosity number of 76 ml/g as determined in a phenol/o-dichlorobenzene solution having a weight ratio of 1:1 in a 25±0.05°C thermostatic water bath as defined in GB/T 17931-1999.

S4, two final polymerization products Poly-Ba1 and Poly-Ba2 were continuously sent into a 250°C mixer for retention for 30-60 min. Afterwards, the obtained polyester was introduced into a twin-screw extruder, and meanwhile, 4.2 kg/h of HDI were measured and added, and then the temperature was set 250°C. 2 min later after the retention, the polyester was then granulated with an underwater granulator, and dried to obtain the final polyester product.

Table 1 Examples 1-9 and Comparative Examples 1-3

| | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|
| Resin | A | B | C | D | E | F | G | H | I | J | K | L |
| Branching agent | Glycerol | Glycerol | 0 | Glycerol | Glycerol | Glycerol | Glycerol | Glycerol | Glycerol | Glycerol | Glycerol | Glycerol |
| Chain extender | HDI | HDI | HDI | HDI | HDI | HDI | 0 | HDI | HDI | HDI | HDI | HDI |
| Terephthalic acid/mol% | 46.8 | 46.7 | 46.5 | 55.5 | 46.6 | 46.9 | 46.5 | 46.6 | 46.7 | 46.7 | 46.9 | 46.5 |
| Adipic acid/mol% | 53.2 | | 53.5 | 44.5 | 53.4 | 53.1 | 53.5 | 53.4 | 53.3 | 53.3 | 53.1 | 53.5 |
| Decanedioic acid/mol% | | 53.3 | | | | | | | | | | |
| Content of the hydroxyl linked to an aliphatic dicarboxylic acid, $X_A$/mmol/kg | 30 | 28 | 31 | 32 | 31 | 33 | 35 | 23 | 37 | 16 | 12 | 58 |
| Content of the hydroxyl linked to an aromatic dicarboxylic acid, $X_T$/mmol/kg | 28 | 27 | 28 | 27 | 29 | 30 | 32 | 21 | 35 | 14 | 8 | 52 |
| Total content of hydroxyl, X/mmol/kg | 58 | 55 | 59 | 59 | 60 | 63 | 67 | 44 | 72 | 30 | 20 | 110 |
| Carboxyl group/mmol/kg | 22 | 26 | 24 | 28 | 32 | 40 | 29 | 32 | 19 | 39 | 89 | 13 |
| Viscosity number/ml/g | 223 | 217 | 195 | 220 | 188 | 177 | 168 | 234 | 179 | 237 | 139 | 129 |

EP 4 421 106 A1

17

As can be seen from the above results, the mixed esterification step is adopted during the whole process of Comparative Example 1, and the polymerization temperature is higher such that the portion derived from the aliphatic polyester in the semi-aromatic polyester is readily thermally degraded to cause more side reactions, thus producing carboxyl and some other non-hydroxyl/carboxyl ends (e.g., double bond, etc.); and the obtained semi-aromatic polyester has lower content of hydroxyl.

in Comparative Example 2, since the alcohol-acid ratio is only 1.0, the prepolymer and polycondensation product have very low viscosity number and thus, are hard to achieve chain extension. Moreover, the obtained semi-aromatic polyester has a very low content of hydroxyl, very high content of carboxyl, and low viscosity number;

in Comparative Example 3, the polymerization time is short such that the semi-aromatic polyester has a higher content of hydroxyl and low viscosity number; since the reaction time is shorter, the thermal degradation is low and the carboxyl group content is lower.

Examples 10-18 and Comparative Examples 4-6: based on the following parts by weight:

67 parts of semi-aromatic polyester;
10 parts of PLA;
22 parts of calcium carbonate;
0.5 parts of epoxy copolymer; and
0.2 parts of erucyl amide.

The above materials were mixed well and fed into a twin-screw extruder, extruded and pelleted at 170-210°C to obtain a semi-aromatic polyester composition.

The PLA was purchased from US Natureworks, trade mark: 4060D;

the calcium carbonate was purchased from Jiangsu Yifeng Powder Raw Materials Co., Ltd., trade mark: YF-2350;
the epoxy copolymer was purchased from BASF, trade mark: Joncryl® ADR 4370; and
the erucyl amide was purchased from Jiangxi Weike Axunge Chemistry Co., Ltd., trade mark: WK1890.

Table 2

| | Example 10 | Example 11 | Example 12 | Example 13 | Example 14 | Example 15 | Example 16 | Example 17 | Example 18 | Comparative Example 4 | Comparative Example 5 | Comparative Example 6 |
|---|---|---|---|---|---|---|---|---|---|---|---|---|
| Resin | A | B | C | D | E | F | G | H | I | J | K | L |
| Transverse tensile strength/MPa | 588 | 550 | 503 | 591 | 450 | 455 | 433 | 571 | 463 | 389 | 391 | 379 |
| Longitudinal tensile strength/MPa | 426 | 403 | 385 | 437 | 359 | 377 | 324 | 410 | 385 | 258 | 238 | 221 |
| Transverse tear strength/mN | 3950 | 3843 | 3742 | 3910 | 3593 | 3621 | 3147 | 3845 | 3730 | 2141 | 2025 | 1956 |
| Longitudinal tear strength/mN | 2263 | 2095 | 1763 | 2058 | 1487 | 1547 | 1250 | 2153 | 1715 | 994 | 954 | 817 |

As can be seen from the above results, in Examples 10-18, the PBAT resin with suitable content of hydroxyl is used, and the obtained semi-aromatic polyester compositions all have a tensile strength of greater than 300 MPa and tear strength of greater 1000 mN and thus, all may meet the use requirements; in Comparative Examples 4-5, the PBAT resin used has a low content of hydroxyl, causing poor compatibility of PBAT with PLA; and the obtained semi-aromatic polyester compositions have sharply declined tensile strength and tear strength; and in Comparative Example 6, since the hydroxyl content in the PBAT resin is too high, the obtained semi-aromatic polyester composition likewise has very low tensile strength and tear strength.

**Claims**

1.  A semi-aromatic polyester, **characterized in that**, the semi-aromatic polyester is derived from repeating units consisting of the following components:

    a first component A, based on a total molar weight of the first component A, comprising:

       a1) 40-60 mol% of at least one aliphatic dicarboxylic acid or a derivative thereof;
       a2) 40-60 mol% of at least one aromatic dicarboxylic acid or a derivative thereof; and

    a second component B: 1,4-butanediol;
    wherein a content of hydroxyl linked to the aliphatic dicarboxylic acid in the semi-aromatic polyester is 17-40 mmol/kg, a content of hydroxyl linked to the aromatic dicarboxylic acid in the semi-aromatic polyester is 17-40 mmol/kg, and a total content of hydroxyl is 35-80 mmol/kg.

2.  The semi-aromatic polyester according to claim 1, **characterized in that**, the component a1) is selected from a mixture of one or more oxalic acid, malonic acid, succinic acid, glutaric acid, adipic acid, pimelic acid, suberic acid, azelaic acid, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, or tetracosandioic acid, or ester derivatives thereof or anhydride derivatives thereof, and preferably, one or two of adipic acid, decanedioic acid, or ester derivatives thereof or anhydride derivatives thereof.

3.  The semi-aromatic polyester according to claim 1, **characterized in that**, the component a2) is selected from one of or a mixture of more terephthalic acid, isophthalic acid, naphthalenedicarboxylic acid, or esters derivative thereof or anhydride derivatives thereof, and preferably terephthalic acid, or ester derivatives thereof or anhydride derivatives thereof.

4.  The semi-aromatic polyester according to any one of claims 1-3, **characterized in that**, based on the total molar weight of the first component A, the semi-aromatic polyester further comprises 0.01-5.0 mol% of a third component C, and 0.01-5.0 mol% of a fourth component D.

5.  The semi-aromatic polyester according to claim 4, **characterized in that**, the third component C is selected from one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, or pyromellitic dianhydride, and preferably trimethylolpropane, pentaerythritol, or glycerol.

6.  The semi-aromatic polyester according to claim 4, **characterized in that**, the fourth component D is selected from one or more of an isocyanate, isocyanurate, peroxide, epoxide, oxazoline, oxazine, lactam, carbodiimide or polycarbodiimide comprising two or more functional groups.

7.  The semi-aromatic polyester according to any one of claims 1-6, **characterized in that**, the semi-aromatic polyester has a viscosity number of 150-350ml/g as determined in a phenol/o-dichlorobenzene solution having a weight ratio of 1:1 in a 25±0.05°C thermostatic water bath in accordance with the provision of GB/T 17931-1999.

8.  The semi-aromatic polyester according to any one of claims 1-6, **characterized in that**, the semi-aromatic polyester has a carboxyl group content of 5-50 mmol/kg, and more preferably 10-30 mmol/kg.

9.  A method for preparing the semi-aromatic polyester according to any one of claims 1-8, **characterized by** comprising the following steps:

S1, adding a1 in a first component A and a second component B to a slurry formulation kettle according to a proportion, conveying a formulated slurry into a first esterification reactor, adding the refluxed second component B and a catalyst to the first esterification reactor from another path, and performing esterification for 2-4 h at 150-200°C and 30-110 kPa, to obtain an esterification product Ba1; adding a2 in the first component A and the second component B to a slurry formulation kettle according to a proportion, conveying a formulated slurry into a second esterification reactor, adding the refluxed second component B and a catalyst to the second esterification reactor from another path, and performing esterification for 2-4 h at 200-250°C and 30-110 kPa, to obtain an esterification product Ba2;

S2: performing primary polycondensation on the esterification product Ba1 obtained in the step S1 at a reaction temperature of 170-220°C and a pressure of 1-10 kPa; performing primary polycondensation on the esterification product Ba2 obtained in the step S1 at a reaction temperature of 230-270°C and a pressure of 1-10 kPa; wherein both the esterification products Ba1 and Ba2 are separately subjected to the primary polycondensation, respectively until each reaction product reaches a viscosity number of 15-60 ml/g as determined in a phenol/o-dichlorobenzene solution having a weight ratio of 1:1 in a 25±0.05°C thermostatic water bath in accordance with the provision of GB/T 17931-1999, to obtain a primary polycondensation product Pre-Ba1 and a primary polycondensation product Pre-Ba2, respectively;

S3, transferring the primary polycondensation product Pre-Ba1 obtained in the step S2 into a first final polycondensation kettle for reaction at a temperature of 180-230°C and a pressure of 10-500 kPa; transferring the primary polycondensation product Pre-Ba2 obtained in the step S2 into a second final polycondensation kettle for reaction at a temperature of 220-270°C and a pressure of 10-500 kPa; wherein both the primary polycondensation products Pre-Ba1 and Pre-Ba2 are separately subjected to polycondensation, respectively until each reaction product reaches a viscosity number of 50-180 ml/g as determined in a phenol/o-dichlorobenzene solution having a weight ratio of 1:1 in a 25±0.05°C thermostatic water bath in accordance with the provision of GB/T 17931-1999, to obtain a final polycondensation product Poly-Ba1 and a final polycondensation product Poly-Ba2, respectively; and

S4, mixing the final polycondensation products Poly-Ba1 and Poly-Ba2 obtained in the step S3 in a mixer for reaction to obtain the semi-aromatic polyester such that the semi-aromatic polyester reaches a viscosity number of 150-300 ml/g as determined in a phenol/o-dichlorobenzene solution having a weight ratio of 1:1 in a 25±0.05°C thermostatic water bath in accordance with the provision of GB/T 17931-1999.

10. The method for preparing the semi-aromatic polyester according to claim 9, further comprising a step S5: adding the semi-aromatic polyester obtained in the step S4 to a fourth component D for chain propagation reaction at a temperature of 200-270°C for retention for 0.5-15 min, and preferably 2-5 min until a reaction product reaches a viscosity number of 150-350 ml/g as determined in a phenol/o-dichlorobenzene solution having a weight ratio of 1:1 in a 25±0.05°C thermostatic water bath in accordance with the provision of GB/T 17931-1999, to obtain a final product.

11. A semi-aromatic polyester molding composition, comprising the following components in weight percentage:

5-95 wt% of the semi-aromatic polyester according to any one of claims 1-8;
5-95 wt% of an additive and/or other polymers; and
0-70 wt% of a reinforcing material and/or a filler.

12. Use of the semi-aromatic polyester according to any one of claims 1-8 in preparing a compost-degradable product, wherein the compost-degradable product is a fiber, a film, or a container.

FIG. 1

FIG. 2

<table>
<tr><td colspan="2">**INTERNATIONAL SEARCH REPORT**</td><td colspan="2">International application No.<br>**PCT/CN2022/124852**</td></tr>
</table>

| A. | CLASSIFICATION OF SUBJECT MATTER |
|---|---|

C08G 63/183(2006.01)i;  C08G 63/85(2006.01)i;  C08L 67/02(2006.01)i;  C08L 67/04(2006.01)i;  C08L 63/00(2006.01)i

According to International Patent Classification (IPC) or to both national classification and IPC

| B. | FIELDS SEARCHED |
|---|---|

Minimum documentation searched (classification system followed by classification symbols)

C08G63;  C08L67;  C08L63

Documentation searched other than minimum documentation to the extent that such documents are included in the fields searched

Electronic data base consulted during the international search (name of data base and, where practicable, search terms used)

CNABS, CNTXT, VEN, WOTXT, USTXT, EPTXT, CNKI, 万方, WANFANG, 读秀, DUXIU, 谷歌, GOOGLE, 谷歌学术, GOOGLE SCHOLAR, 百度学术, BAIDU SCHOLAR, ISI, STN, CAPLUS, REGISTRY: 珠海万通, 金发, KINGFA, 张传辉, 陈平绪, 叶南飚, 欧阳春平, 麦开锦, 董学腾, 曾祥斌, 卢昌利, 蔡彤旻, 芳香, 芳族, 脂肪, 脂族, 半芳香, 半芳族, 聚酯, PBAT, PBST, 对苯二甲酸, 间苯二甲酸, 己二酸, 癸二酸, 丁二醇, 羟值, 羟基, aromatic, aliphatic, semi-aromatic, polyester, terephthalic acid, isophthalic acid, adipic acid, sebacic acid, butanediol, hydroxyl number, mmol/kg

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112280026 A (JIANGSU KINGFA SCI. & TECH. ADVANCED MATERIALS CO., LTD.) 29 January 2021 (2021-01-29)<br>embodiments 1-2, tables 1 and 14, and description, paragraphs 8, 15-45, and 63-64 | 1-12 |
| X | CN 102443149 A (KINGFA SCI. & TECH. CO., LTD. et al.) 09 May 2012 (2012-05-09)<br>description, paragraphs 14-42, and embodiments 1-3 | 1-12 |
| A | CN 103881072 A (BEIJING UNIVERSITY OF CHEMICAL TECHNOLOGY) 25 June 2014 (2014-06-25)<br>entire document | 1-12 |
| A | CN 103483522 A (SHANGHAI GENIUS ADVANCED MATERIAL GROUP CO., LTD.) 01 January 2014 (2014-01-01)<br>entire document | 1-12 |
| A | CN 103709679 A (KINGFA SCIENCE AND TECHNOLOGY CO., LTD.) 09 April 2014 (2014-04-09)<br>entire document | 1-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2022** | **04 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/124852** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2008031456 A (MITSUBISHI CHEM CORP. et al.) 14 February 2008 (2008-02-14) <br> entire document | 1-12 |
| A | JP 2004035674 A (TEIJIN LTD.) 05 February 2004 (2004-02-05) <br> entire document | 1-12 |
| A | JP 2013124291 A (TEIJIN LTD.) 24 June 2013 (2013-06-24) <br> entire document | 1-12 |

Form PCT/ISA/210 (second sheet) (January 2015)

**INTERNATIONAL SEARCH REPORT**
**Information on patent family members**

International application No.

**PCT/CN2022/124852**

| Patent document cited in search report | | | Publication date (day/month/year) | Patent family member(s) | | | Publication date (day/month/year) |
|---|---|---|---|---|---|---|---|
| CN | 112280026 | A | 29 January 2021 | CN | 112280026 | B | 09 March 2021 |
| | | | | US | 2022204753 | A1 | 30 June 2022 |
| | | | | KR | 20220097349 | A | 07 July 2022 |
| | | | | WO | 2022142512 | A1 | 07 July 2022 |
| | | | | JP | 2022105312 | A | 13 July 2022 |
| CN | 102443149 | A | 09 May 2012 | CN | 102443149 | B | 10 September 2014 |
| CN | 103881072 | A | 25 June 2014 | CN | 103881072 | B | 11 May 2016 |
| CN | 103483522 | A | 01 January 2014 | | None | | |
| CN | 103709679 | A | 09 April 2014 | CN | 103709679 | B | 10 February 2016 |
| JP | 2008031456 | A | 14 February 2008 | JP | 5167502 | B2 | 21 March 2013 |
| JP | 2004035674 | A | 05 February 2004 | | None | | |
| JP | 2013124291 | A | 24 June 2013 | JP | 5956148 | B2 | 27 July 2016 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 179311999 T

**Non-patent literature cited in the description**

- **CHEN, X ; CHEN, W.; ; ZHU, G ; HUANG, F. ; ZHANG, J.** Synthesis, 1H-NMR characterization, and biodegradation behavior of aliphatic aromatic random copolyester. *J. Appl. Polym. Sci.,* 2007, vol. 104 (4), 2643-2649

- **HERRERA, R ; FRANCO, L ; RODRÍGU-EZ-GALÁN, A. ; PUIGGALI, J.** Characterization and degradation behavior of poly(butylene adipate-co-terephthalate)s. *J. Polym. Sci., Part A: Polym. Chem.,* 2002, vol. 40 (23), 4141-4157